## Europäisches Patentamt

## European Patent Office

## Office européen des brevets

(19)

(11) Veröffentlichungsnummer: **0 056 873**

**A1**

(12) # EUROPÄISCHE PATENTANMELDUNG

(21) Anmeldenummer: **81110777.0**

(22) Anmeldetag: **24.12.81**

(51) Int. Cl.³: **A 01 D 51/00**

(30) Priorität: **23.01.81 DE 3102082**

(43) Veröffentlichungstag der Anmeldung:
**04.08.82 Patentblatt 82/31**

(84) Benannte Vertragsstaaten:
**AT BE CH DE FR GB IT LI NL**

(71) Anmelder: **Schulte, Werner**
**Bruchstrasse 4**
**D-4787 Geseke 3/ Langeneicke(DE)**

(71) Anmelder: **Schulte, Meinolf**
**Bruchstrasse 4**
**D-4787 Geseke 3/Langeneicke(DE)**

(72) Erfinder: **Schulte, Werner**
**Bruchstrasse 4**
**D-4787 Geseke 3/ Langeneicke(DE)**

(72) Erfinder: **Schulte, Meinolf**
**Bruchstrasse 4**
**D-4787 Geseke 3/Langeneicke(DE)**

(74) Vertreter: **Junius, Walther, Dr.**
**Wolfstrasse 24**
**D-3000 Hannover 81(DE)**

(54) **Vorrichtung zum Aufnehmen von Rüben.**

(57) An einer Vorrichtung zum Aufnehmen von Rüben, bestehend aus mehreren Arbeitsgeräten, nämlich einem dicht an der Bodenoberfläche angreifenden Aufnahmenwerkzeug (7,8), mindestens einem Transportband (9) und einem Elevator (10) soll die Aufgabe gelöst werden, ein preiswert herstellbares Gerät zu schaffen, welches an einem herkömmlichen Anhänger leicht montierbar und wieder demontierbar ist. Die Erfindung löst diese Aufgabe dadurch, daß die Arbeitsgeräte an einem gemeinsamen Geräteträger (6) montiert sind, und daß der Geräteträger (6) unter dem vorderen Teil des Fahrzeugrahmens (2) eines mit starren Achsen (4) ausgerüsteten Anhängers leicht abbaubar montiert ist.

Hierdurch wird es möglich, einen herkömmlichen Einachsanhänger oder einen mit zwei starren Achsen (4) ausgerüsteten Anhänger zu benutzen, um die im Schwad liegenden Rüben gleichzeitig aufzusammeln und abzutransportieren.

EP 0 056 873 A1

FIG.1

## Vorrichtung zum Aufnehmen von Rüben

Die Erfindung betrifft eine Vorrichtung zum Aufnehmen von Rüben, bestehend aus mehreren Arbeitsgeräten, nämlich einem dicht an der Bodenoberfläche angreifenden Aufnahmewerkzeug, mindestens einem Transportband und einem Elevator.

Im Schwad von einer mehrreihigen Rübenerntemaschine abgelegte Rüben werden bisher von einer mit Rädern versehen, an einen Schlepper angehängten Vorrichtung aufgenommen, die als Arbeitsgeräte ein dicht an der Bodenoberfläche angreifendes Aufnahmewerkzeug, ein Transportband und einen Elevator aufweist. Von dem Elevator werden die Rüben nach oben gefördert und auf einen neben der Aufnehmevorrichtung herfahrenden Wagen geworfen. Dieser Wagen ist im allgemeinen ein Anhänger, der an einen gesonderten Schlepper angehängt ist. Diese Art des Aufnehmens und Abtransportierens der Rüben wird überall dort durchgeführt, wo die mehrreihige Rübenerntemaschine entweder keinen Rübenbunker aufweist oder der Rübenbunker nicht groß genug ist, um all die Rüben zwischenzulagern, die auf der Fahrt des Rübenroders von einem Ende zum anderen Ende des Schlages anfallen.

- 2 -

Das Aufnehmen und Aufladen der Rüben in dieser Art erfordert zwei Ackerschlepper, nämlich einen, der die Aufnahmevorrichtung zieht und einen, der den die Rüben aufnehmenden Wagen zieht. Das ist ein hoher Aufwand, wenn man bedenkt, daß die Rüben oftmals am Rande des Rübenschlages bereits wieder vom Wagen abgeladen werden, um dort eingemietet zu werden oder zu lagern, bis der Termin für die Ablieferung an die Zuckerfabrik gekommen ist.

Die Erfindung vermeidet diese Nachteile. Es ist die Aufgabe der Erfindung, ein preiswert herstellbares Gerät zu schaffen, welches an einem herkömmlichen Anhänger leicht montierbar und wieder demont ierbar ist.

Die Erfindung besteht darin, daß die Arbeitsgeräte an einem gemeinsamen Geräteträger montiert sind und daß der Geräteträger unter dem vorderen Teil des Fahrzeugrahmens eines mit starren Achsen ausgerüsteten Anhängers leicht abbaubar montiert ist.

Hierdurch wird es möglich, einen herkömmlichen Einachsanhänger oder einen mit zwei starren Achsen ausgerüsteten Anhänger zu benutzen, um die im Schwad liegenden Rüben gleichzeitig aufzusammeln und abzutransportieren. Hierdurch wird während der Ernte ein Schlepper und die Arbeitskraft eines Schlepperfahrers eingespart. Dabei ist der verwendete Anhänger nach der Rübenernte anderweitig einsetzbar. Die Rübenaufnehmevorrichtung hingegen weist hierbei eine räumlich gedrängte Bauform auf und ist daher in landwirtschaftlichen Betriebsgebäuden ausserhalb der Erntezeit leicht und raumsparend aufbewahrbar.

Trotz der gedrängten Bauform lässt sich eine gute Reinigung der aufgenommenen Rüben erzielen, wenn hinter dem Aufnahmewerkzeug ein in Fahrtrichtung nach hinten verlaufendes Förderband angeordnet ist, wenn am Ende des nach hinten verlaufenden Förderbandes eine Umlenkvorrichtung vorgesehen ist und wenn an der Umlenkvorrichtung mindestens ein nach vorne förderndes Förderband vorgesehen ist und wenn an dieses der Elevator anschließt. Dann nämlich werden die aufgenommenen Rüben über einen weiten Weg und mehrere Transportbänder geführt, wobei auf diesen Transportbändern die Reinigung durch die Bewegung der Rüben auf diesen Bändern erfolgt. Die Reinigung ist besonders intensiv, wenn es sich um Stabbänder bzw. Stabkettenbänder handelt.

Die hierbei verwendete Umlenkvorrichtung ist zweckmäßigerweise eine sich drehende Welle mit einer Schnecke. Eine derartige Umlenkvorrichtung fördert ebenfalls die Reinigung der Rüben.

Besonders vorteilhaft ist es, wenn das Aufnahmewerkzeug mittig angeordnet ist, wenn die Umlenkvorrichtung eine sich drehende Welle mit zwei gegensinnig gewendelten Schnecken ist und wenn beidseitig des nach hinten verlaufenden Förderbandes je ein nach vorn verlaufendes Förderband vorgesehen ist, an deren Ende eine zum Elevator führende Sammelvorrichtung angeordnet ist.
Bei dieser Ausführungsform wird der Strom der aufgenommenen Rüben geteilt und verläuft über zwei getrennte Bänder nach vorn in Richtung zum Elevator. Dies erbringt eine besonders gute Reinigungswerkung.

Darüberhinaus ist der Vorteil gegeben, daß der benutzte Anhänger durch die Rübenaufnehmevorrichtung symmetrisch zu seiner Längsachse belastet ist.

Als besonders vorteilhaft hat es sich erwiesen, wenn der Elevator mittig angeordnet ist und die Sammelvorrichtung eine sich drehende Welle mit zwei gegensinnig gewendelten Schnecken ist. Durch die mittige Anordnung des Elevators wird der Anhänger symmetrisch zu seiner Längsachse belastet. Dabei kann der Elevator vor der Bordwand der Pritsche des Anhängers angeordnet sein, er kann aber auch einen Ausschnitt des Pritschenbodens durchsetzen, der von Bordwänden umgeben ist.

Es besteht aber auch die Möglichkeit, daß der Elevator seitlich angeordnet ist und die Sammelvorrichtung eine sich drehende, einseitig fördernde Schnecke ist.

Die Anbringung der Rübenaufnahmevorrichtung an dem Anhänger ermöglicht es, diesen Anhänger mit einer Kippvorrichtung oder einem Kratzband auszustatten, um die Rüben nach hinten hin abzuladen. Denn die Rübenaufnahmevorrichtung bildet während des Abladevorganges ein vorn lagerndes Gegengewicht.

Für die Aufnahme der im Schwad auf dem Acker liegenden Rüben wird zweckmäßigerweise als Aufnahmewerkzeug das vordere Ende eines Stabförderbandes benutzt, dem - darübergelagert - ein zweites Förderband zugeordnet ist, dessen Unterseite ebenso wie die Oberseite des aufnehmenden Stabförderbandes in Gegenrichtung zur Fahrtrichtung bewegt wird. Es besteht aber auch die Möglichkeit, als Aufnahmewerkzeug Rodeschare zu verwenden, die gleichzeitig das Roden der Rüben übernehmen. Dieses ist insbesondere für kleinere landwirtschaftliche Betriebe von Bedeutung. In diesem Falle wird zweckmäßigerweise die Aufnahmevorrichtung seitlich neben dem Anhänger angeordnet.

Das Wesen der Erfindung ist nachstehend anhand von in der Zeichnung schematisch dargestellten Ausführungsbeispielen näher erläutert. Es zeigen:

Fig. 1 eine Seitenansicht eines Anhängers mit der erfindungsgemäßen Vorrichtung, teilweise im Schnitt.

Fig. 2 eine Ansicht von oben auf die Rübenaufnahmevorrichtung ohne Elevator.

Fig. 3 eine Seitenansicht eines mit Kippvorrichtung und Kratzband ausgerüsteten Anhängers mit einer Rübenaufnahmevorrichtung, deren Elevator vor der Pritsche des Anhängers angeordnet ist.

Fig. 4 eine Ansicht von vorne auf den Anhänger der Fig. 3.

Der Ackerschlepper 1 zieht einen Anhänger, auf dessen Fahrzeugrahmen 2 die mit Bordwänden versehene Pritsche 3 angebracht ist. Der Fahrzeugrahmen 2 des Anhängers ist von zwei starren Achsen 4 getragen, an denen die Fahrzeugräder 5 befestigt sind.

Unterhalb des vorderen Teiles des Fahrzeugrahmens 2 ist ein Geräteträger in Form eines Rahmens 6 montiert, der die einzelnen Arbeitsgeräte der Rübenaufnahmevorrichtung trägt, nämlich ein die Rüben
vom Ackerboden aufnehmendes Stabförderband 7,
ein diesem zugeordnetes weiteres Förderband 8,
welches mit seiner Unterseite ebenso wie die Oberseite des Förderbandes 7 in Gegenrichtung zur
Fahrtrichtung verläuft und welches als Hilfsvorrichtung für das Aufsammeln der Rüben dient, zwei
seitlich horizontal angeordnete Förderbänder 9,
die die Rüben in Fahrtrichtung in Richtung auf
den Elevator 10 fördern, die Umlenkvorrichtung, die
aus der Welle 22 mit zwei gegenläufig angeordneten
Schnecken 11,12 besteht, sowie die Sammelvorrichtung, die aus der Welle 13 mit den darauf angeordneten gegenläufigen Schnecken 14 besteht. Der Rahmen
6 mit diesen Arbeitsgeräten ist leicht abbaubar
unter dem Vorderteil des Fahrzeugrahmens 7 angeordnet.

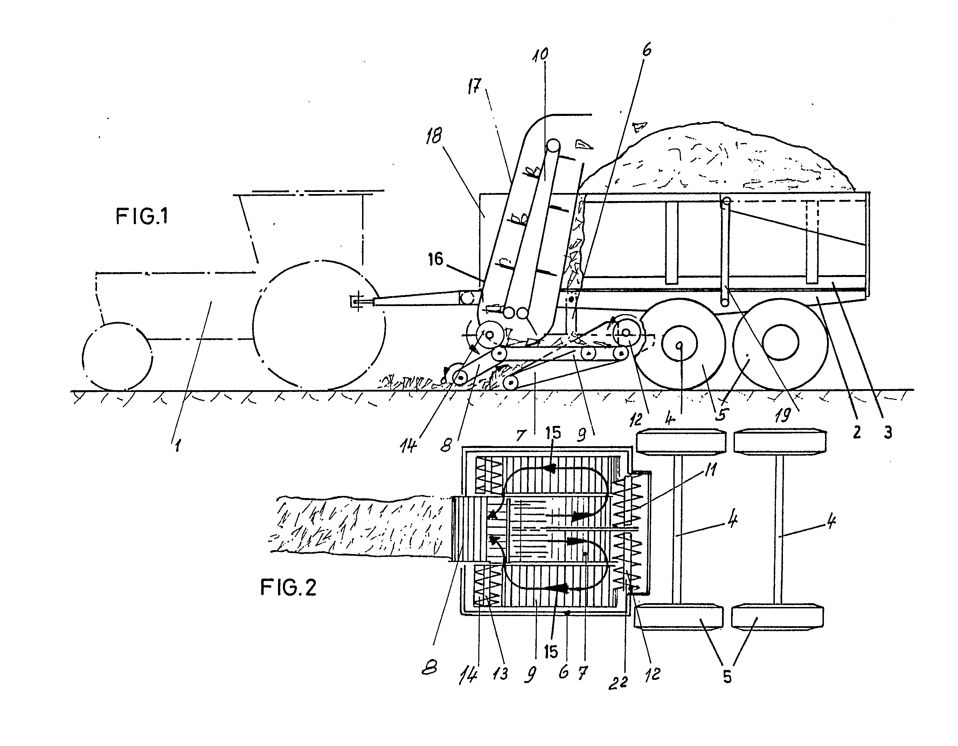

Im gezeichneten Ausführungsbeispiel der Fig. 2 ist
das Band 7 geteilt ausgeführt. Das kann den Vorteil haben, daß zwei gleiche Bänder verwendet werden, die in der Anschaffung manchmal billiger sind.
Ebenso können die Wellen 22 und 13 aus zwei miteinander verbundenen Stücken bestehen, die jeweils
eine Schnecke tragen.

In Fig. 2 ist ausser der Rübenaufnahmevorrichtung
noch die Lage der Achsen 4 und der Räder 5 des
Anhängers angedeutet. Die mit Pfeilen versehenen
Linien 15 stellen die Wege dar, über die die Rüben
während des Aufnahme- und Reinigungsvorganges
verlaufen.

Im Ausführungsbeispiel der Fig. 1 und 2 ist der Elevator 10 mittig angeordnet und durchsetzt eine Öffnung 16 im Pritschenboden des Anhängers. Diese Öffnung 16 ist von Wänden umgeben. Diese Wände sind nicht unbedingt erforderlich, wenn das Gehäuse 17 des Elevators ausreichend fest gebaut ist und sich so dicht an den Kanten der Öffnung 16 befindet, daß keine Rüben zwischen der Kante der Öffnung und dem Elevatorgehäuse 17 hindurchfallen können.

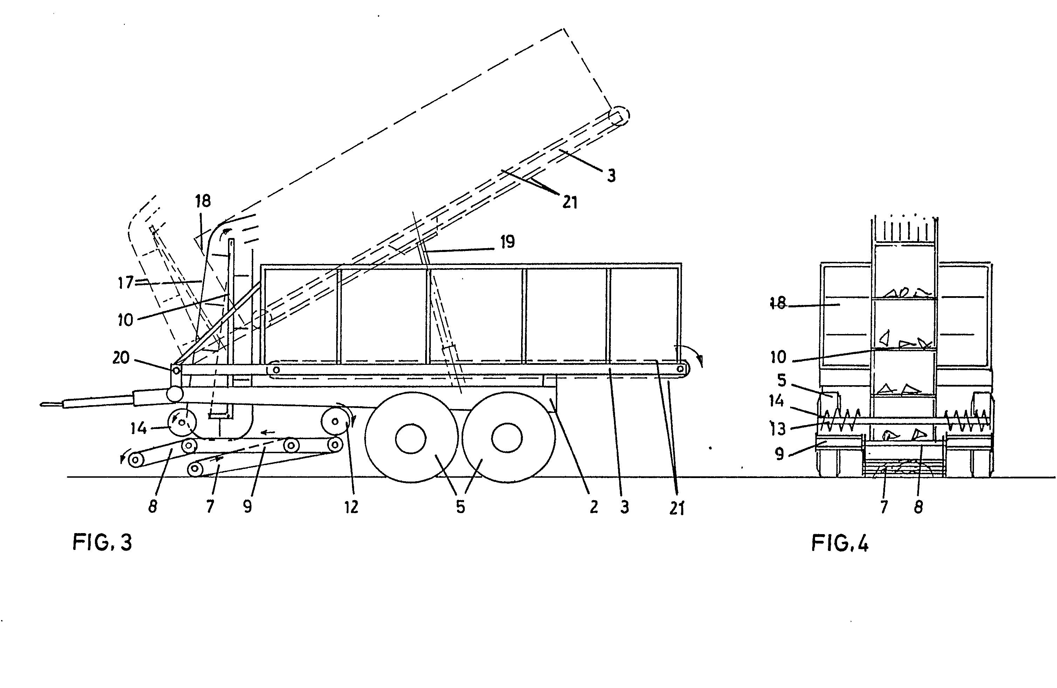

Im Ausführungsbeispiel der Figuren 3 und 4 ist der Elevator vor der Bordwand 18 des Anhängers angeordnet. Das hat den Vorteil, daß die Rübenaufnahmevorrichtung etwas leichter zu montieren ist. Auch hat das den Vorteil, daß die Öffnung 16 im Boden der Pritsche des Anhängers entfallen kann.

Im gezeichneten Ausführungsbeispiel der Fig. 3 und 4 ist die Pritsche mit einem Kratzboden 21 versehen und gleichzeitig ist die Pritsche um die Schwenkachse 20 mittels eines Hydraulikzylinders 19 verschwenkbar. Bei dieser Ausführungsform ist es zweckmäßig, wenn der Elevator mit der Bordwand 18 fest verbunden ist und beim Schwenken der Pritsche 3 mit verschwenkt wird. Diese Ausführungsform hat den Vorteil, daß bei gekippter Pritsche die auf ihr lagernden Rüben mittels des Kratzbandes 21 hoch auf einen Rübensilo abgeworfen werden können.

Nicht gezeichnet ist eine Ausführungsform, bei der der Elevator seitlich angeordnet ist. Bei dieser Ausführungsform weist die Sammelvorrichtung nicht zwei gegenläufige Schneckenstücke auf, sondern eine einzige Schnecke, die in einer Richtung verläuft und in einer Richtung fördert. Nach Beendigung der Aufnehmearbeiten sind die Förderbänder 7 und 8 für den Transport so hochklappbar, daß sie dem Anhänger eine genügende Bodenfreiheit geben. Der Anhänger kann dann ohne weiteres im Straßentransport eingesetzt werden.

Der Antrieb der Förderbänder 7,8,9 sowie der Schneckenwellen 22,13 und des Elevators 10 kann von der Zapfwelle des Schleppers 1 aus erfolgen. Möglich ist auch ein Antrieb von den Fahrzeugrädern 5 her. Ein hydraulischer Antrieb der einzelnen Arbeitsgeräte würde den Vorteil mit sich bringen, daß die Aggregate auch einzeln antreibbar und in ihrer Arbeitsgeschwindigkeit einzeln einstellbar wären.

Patentansprüche:

1. Vorrichtung zum Aufnehmen von Rüben, bestehend aus mehreren Arbeitsgeräten, nämlich einem dicht an der Bodenoberfläche angreifenden Aufnahmewerkzeug, mindestens einem Transportband und einem Elevator,
dadurch gekennzeichnet,
daß die Arbeitsgeräte an einem gemeinsamen Geräteträger (6) montiert sind
und daß der Geräteträger (6) unter dem vorderen Teil des Fahrzeugrahmens (2) eines mit starren Achsen (4) ausgerüsteten Anhängers leicht abbaubar montiert ist.

2. Vorrichtung nach Anspruch 1,
dadurch gekennzeichnet,
daß hinter dem Aufnahmewerkzeug ein in Fahrtrichtung nach hinten verlaufendes Förderband (7) angeordnet ist,
daß am Ende des nach hinten verlaufenden Förderbandes (7) eine Umlenkvorrichtung vorgesehen ist,
daß an der Umlenkvorrichtung mindestens ein nach vorne förderndes Förderband (9) vorgesehen ist
und daß an dieses der Elevator (10) anschließt.

3. Vorrichtung nach Anspruch 1 und 2,
dadurch gekennzeichnet,

- 2 -

daß die Umlenkvorrichtung eine sich drehende Welle (22) mit mindestens einer Schnecke (11,12) ist.

4. Vorrichtung nach Anspruch 2,
dadurch gekennzeichnet,
daß das Aufnahmewerkzeug mittig angeordnet ist,
daß die Umlenkvorrichtung eine sich drehende Welle (22) mit zwei gegensinnig gewendelten Schnecken (11,12) ist
und daß beidseitig des nach hinten verlaufenden Förderbandes (7) je ein nach vorn verlaufendes Förderband (9) vorgesehen ist, an deren Enden eine zum Elevator (10) führende Sammelvorrichtung angeordnet ist.

5. Vorrichtung nach Anspruch 4,
dadurch gekennzeichnet,
daß der Elevator (10) mittig angeordnet ist und die Sammelvorrichtung eine sich drehende Welle (13) mit zwei gegensinnig gewendelten Schnecken (14) ist.

6. Vorrichtung nach Anspruch 4,
dadurch gekennzeichnet,
daß der Elevator (10) seitlich angeordnet ist und die Sammelvorrichtung eine sich drehende, einseitig fördernde Schnecke ist.

7. Vorrichtung nach Anspruch 5,
dadurch gekennzeichnet,
daß der Elevator (10) vor der Bordwand (18) der Pritsche des Anhängers angeordnet ist.

8. Vorrichtung nach Anspruch 5,
dadurch gekennzeichnet,
daß der Elevator (10) einen Ausschnitt (16) des
Pritschenbodens durchsetzt, der von Bordwänden
umgeben ist.

9. Vorrichtung nach Anspruch 1,
dadurch gekennzeichnet,
daß die Pritsche des Anhängers mit einer
Kippvorrichtung, bestehend aus einem Hydraulikzylinder (19) und einer Schwenkachse (20),
versehen ist.

10. Vorrichtung nach Anspruch 1,
dadurch gekennzeichnet,
daß der Pritschenboden des Anhängers mit
einem Kratzband (21) versehen ist.

11. Vorrichtung nach Anspruch 2 und 4,
dadurch gekennzeichnet,
daß die Förderbänder (7,9) Stabbänder sind.

12. Vorrichtung nach Anspruch 2,
dadurch gekennzeichnet,
daß das Aufnahmewerkzeug Rodeschare sind.

Patentansprüche:

1. Vorrichtung zum Aufnehmen von Rüben, bestehend aus mehreren, an einem die Rüben transportierenden Fahrzeug angebauten Arbeitsgeräten, nämlich einem dicht an der Bodenoberfläche angreifenden Aufnahmewerkzeug, einem daran anschließenden nach hinten fördernden Transportband, einer Umlenkvorrichtung, einer nach vorn fördernden Transportbandanlage und einem sich daran anschließenden Elevator, dadurch gekennzeichnet, daß das Aufnahmewerkzeug mittig angeordnet ist, daß die Umlenkvorrichtung eine sich drehende Welle (22) mit zwei gegensinnig gewendelten Schnecken (11,12) ist und daß beidseitig des nach hinten verlaufenden Förderbandes (7) je ein nach vorn verlaufedes Förderband (9) vorgesehen ist, an deren Enden eine zum Elevator (10) führende Sammelvorrichtung angeordnet ist.

2. Vorrichtung nach Anspruch 1, dadurch gekennzeichnet, daß die Arbeitsgeräte an einem gemeinsamen Geräteträger (6) montiert sind und daß der Geräteträger (6) unter dem vorderen Teil des Fahrzeugrahmens (2) eines mit starren Achsen (4) ausgerüsteten Anhängers leicht abbaubar montiert ist.

**0056873**

3. Vorrichtung nach Anspruch 1 und 2,
   dadurch gekennzeichnet,
   daß der Elevator (10) mittig angeordnet ist
   und die Sammelvorrichtung eine sich drehende Welle (13) mit zwei gegensinnig gewendelten Schnecken (14) ist.

4. Vorrichtung nach Anspruch 3,
   dadurch gekennzeichnet,
   daß der Elevator (10) vor der Bordwand (18)
   der Pritsche des Anhängers angeordnet ist.

5. Vorrichtung nach Anspruch 3,
   dadurch gekennzeichnet,
   daß der Elevator (10) einen Ausschnitt (16)
   des Pritschenbodens durchsetzt, der von Bordwänden umgeben ist.

6. Vorrichtung nach Anspruch 1,
   dadurch gekennzeichnet,
   daß die Pritsche des Anhängers mit einer
   Kippvorrichtung, bestehend aus einem Hydraulikzylinder (19) und einer vorn liegenden
   Schwenkachse (20), versehen ist,
   und daß der Pritschenboden des Anhängers mit
   einem Kratzband (21) versehen ist.

7. Vorrichtung nach Anspruch 1,
   dadurch gekennzeichnet,
   daß die Förderbänder (7,9) Stabbänder sind.

FIG.1

FIG.2

0056873

FIG.4

FIG.3

## EUROPÄISCHER RECHERCHENBERICHT

Europäisches Patentamt

EP 81 11 0777.0

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 616 514 (W. STOLL MASCHINEN-FABRIK GMBH) <br> * Seite 7, vorletzter Absatz bis Seite 9, Zeile 1; Fig. 1, 2 * <br> -- | 1 |
| Y | EP - A1 - 0 015 843 (V. LESERT) <br> * Seite 4, Zeile 24 bis Seite 5, Zeile 10; Fig. 1, 2, 5 * <br> -- | 2,4,5, 7,9 |
| Y | FR - A1 - 2 321 836 (R. BAILLY) <br> * Seite 2, Zeile 35 bis Seite 3, Zeile 8; Fig. 1, 3 * <br> -- | 2,6,7, 9 |
| Y | DE - U - 7 142 738 (GEBR. WELGER) <br> * Anspruch 1; Fig. 1 * <br> -- | 9,10 |
| Y | AT - B - 274 455 (W. STOLL) <br> * Seite 2, Zeilen 47 bis 57; Fig. 2 * <br> -- | 9,10 |
| A | FR - A1 - 2 395 694 (S.A. HERRIAU) <br> * Seite 4, Zeilen 19 bis 27; Fig. 1 * <br> -- | 11 |
| Y | US - A - 2 463 019 (H.F. CLAUSEN) <br> * Fig. 4 * <br> -- | 12 |
| Y | US - A - 1 766 293 (W.L. GRIMES) <br> * Seite 1, Zeilen 67 bis 76; Fig. 1, 2 * <br> ----- | 12 |

**KLASSIFIKATION DER ANMELDUNG (Int Cl.³)**

A 01 D 51/00

**RECHERCHIERTE SACHGEBIETE (Int. Cl.³)**

A 01 D 33/10

A 01 D 51/00

A 01 D 90/10

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

| | | | |
|---|---|---|---|
| X | Der vorliegende Recherchenbericht wurde für alle Patentansprüche erstellt. | | |
| Recherchenort <br> Berlin | Abschlußdatum der Recherche <br> 05-02-1982 | Prüfer <br> SCHOFER | |

EPA form 1503.1   06.78